# EUROPEAN PATENT SPECIFICATION

(11) **EP 1 824 700 B1**
(45) Date of publication and mention of the grant of the patent: **03.03.2010**
(21) Application number: 04809044.3
(22) Date of filing: 10.12.2004
(51) Int. Cl.: B60K 31/00

(54) **METHOD AND COMPUTER PROGRAM AT A VEHICLE FOR ADJUSTING THE DISTANCE TO A VEHICLE AHEAD**
VERFAHREN UND RECHNERPROGRAMM AN EINEM FAHRZEUG ZUR EINSTELLUNG DES ABSTANDS ZU EINEM FAHRZEUG DAVOR
PROCEDE ET PROGRAMME INFORMATIQUE PLACE A BORD D'UN VEHICULE ET PERMETTANT DE REGLER LA DISTANCE PAR RAPPORT A UN VEHICULE PRECEDANT

(43) Date of publication of application: 29.08.2007
(73) Proprietor: VOLVO LASTVAGNAR AB, 405 08 Göteborg (SE)
(72) Inventor: JOHNSSON, Andreas, S-42 338 Torslanda (SE)
(74) Representative: Fröhling, Werner Otto
(86) International application number: PCT/SE2004/001858
(87) International publication number: WO 2006/062452

(56) References cited:
- EP-A1- 0 876 935
- WO-A1-03/002367
- DE-A1- 4 338 098
- DE-A1- 10 043 096
- DE-C1- 19 941 972
- US-A1- 2004 172 182

## Description

### TECHNICAL FIELD

The present invention relates to a method, in a vehicle with a cruise control, for adjusting a desired distance to a vehicle ahead, in accordance with the preamble to claim 1.

### BACKGROUND ART

In order to be able to maintain a constant speed in a vehicle, such as a truck or a car, a so-called cruise control (CC) is often used. The cruise control is particularly useful when a vehicle is being driven relatively long distances, for example when driving a truck on a freeway or the like. Such a cruise control can be activated by operating a start button and often has a control device for selecting the required speed. The speed can be increased and decreased using the control device by operating the plus button or the minus button on the control device. The cruise control function can be deactivated by operating, for example, the vehicle's brake pedal and/or accelerator pedal, after which the vehicle's speed regulation is carried out in the normal way until the cruise control function is reactivated. DE 4338098 A1 relates to a control device for activation and speed adjustment of a vehicle cruise control system. This type of cruise control system does not have sensors for detecting a vehicle ahead and measuring the distance or the so-called time window to the vehicle ahead.

Adaptive cruise control (ACC) is also available which, in addition to a function for adjusting the vehicle's speed, has a function for adjusting a vehicle's distance to a vehicle ahead. Such a system comprises one or more sensors for detecting a vehicle ahead and measuring the distance or the so-called time window to the vehicle ahead. In the event of detection of a vehicle ahead, the cruise control can be adjusted to ensure that a particular distance is maintained to the vehicle ahead, and often in such a case an operator, usually the driver of the vehicle, can select the required distance to the vehicle ahead by means of an additional control device on the adaptive cruise control. The selected distance to the vehicle ahead can, for example, be increased and decreased by operating a plus function and a minus function on the additional control device. The actual distance to a vehicle ahead will then be adjusted/maintained in accordance with the selected distance, provided that the selected speed is not exceeded.

Such a system according to previously known technology has, however, the disadvantage that it is necessary for the driver of the vehicle to be able to operate a relatively complex system and to carry out the correct actions in a situation in which the operator should at the same time be paying the greatest possible attention to the traffic conditions, such as other vehicles, the condition of the road, etc. It is thus desirable for the functions of the vehicle, including the functions of the cruise control, to be able to be used in as simple and safe a way as possible, so that a user-friendly environment for the operator is obtained. A measure that helps to achieve such a driver's environment is to minimize the number of control devices that the driver needs to operate in order to use the functions.

US 5 695 020 describes a cruise control for vehicles, in which cruise control both a speed-based and a distance-based cruise control function can be adjusted using one and the same control device, in accordance with the preamble of claim 1. For the speed-based computer-controlled cruise control function, operation of the control device will result in the current speed of the vehicle being set as the desired value for the speed adjustment, and for the distance-based computer-controlled cruise control function, operation of the control device will result in the current distance to a vehicle ahead being set as the desired value for the distance to a vehicle ahead. Although such a cruise control can be relatively simple for an operator to operate, on the other hand it does not provide the same freedom for the operator to select a required distance to a vehicle ahead in the way that is possible with an adaptive cruise control of the type described above that is provided with a special control device for adjusting a user-defined distance to a vehicle ahead.

EP-A1-0876935 that forms the closest prior art according to the preamble of claim 1 describes an adaptive cruise control where the driver manually selects a speed control function or a distance control function by means of a control button.

DE 10043096 A1 describes an adaptive cruise control where different control buttons are used for speed control function and distance control function.

### OBJECT OF THE INVENTION AND DISCLOSURE OF THE INVENTION

An object of the invention is to provide a method of the type defined in the introduction, by means of which method a cruise control that is provided with a speed-adjustment device can also provide an adjustment of a user-defined distance to a vehicle ahead in a simple and user-friendly way.

The object is achieved by the provision of a method as claimed in the following claim 1.

As a result of the method according to the invention, which means that in a state when a vehicle ahead is detected by the cruise control and the speed of the first vehicle is essentially the same as the speed of the vehicle ahead, the plus function and the minus function of the adjusting device are changed automatically or by the action of an operator from adjusting the speed of the first vehicle to adjusting a distance or a time window between the first vehicle and the vehicle ahead, so that after the said change of function, in the event of operation of the plus function and the minus function of the adjusting device, the selected distance or the selected time window between the first vehicle and the vehicle ahead will be increased or decreased, while, at the same time, as the, cruise control controls the motor and/or brakes of the first vehicle in order to adjust the selected distance/selected time window, an operator of the system only needs to handle one adjusting device instead of two. The same set of buttons, such as a plus button and a minus button, can be used for both adjustment of the selected speed of the vehicle and the selected distance to a vehicle ahead. By this means, the driver can select the desired speed and desired distance to a vehicle ahead in a simple way, which provides a natural and uncomplicated user environment that can contribute to increased road safety. At the same time, the costs of the cruise control can be decreased, as the cruise control works with fewer control devices than is the case with a corresponding cruise control according to previously known technology.

Other advantageous characteristics of the different embodiments of the invention will be apparent from the following description and subordinate claims.

### BRIEF DESCRIPTION OF DRAWINGS

Below follows a detailed description of exemplary embodiments of the invention, with reference to the attached drawings.

In the drawings:
Figure 1 is a schematic illustration of an example of a system in which the method according to the invention can be used, and
Figure 2 is a flow chart for the method according to the invention.

### DETAILED DESCRIPTION OF PREFERRED EMBODIMENTS OF THE INVENTION

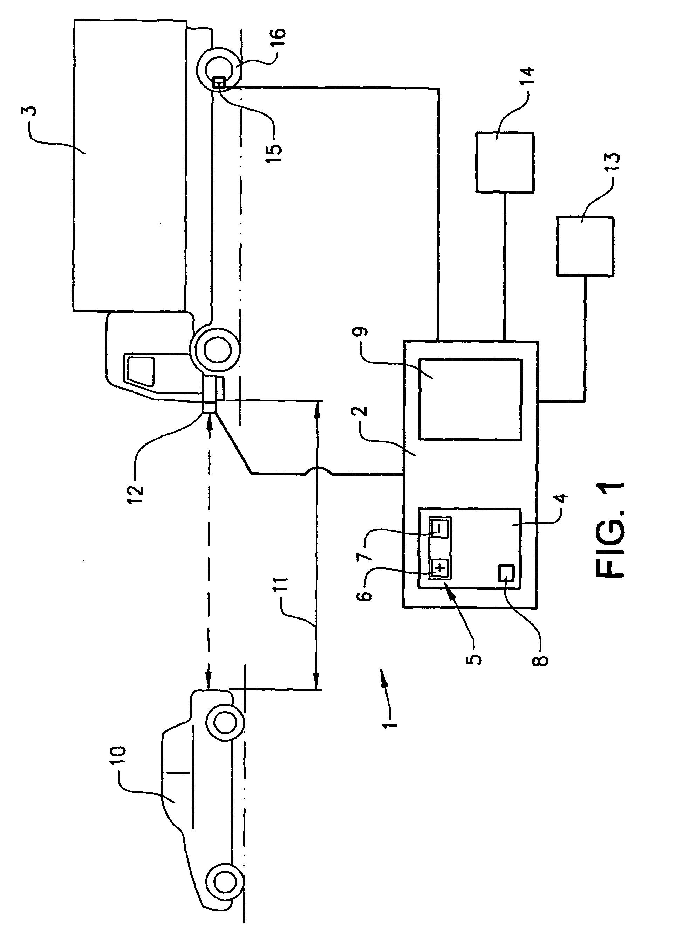

Figure 1 illustrates schematically a system 1 comprising a cruise control 2 in a vehicle 3. The cruise control 2 is suitably arranged internally in the vehicle so that the driver of the vehicle has access to the different functions while driving the vehicle. It should be emphasized that the system described does not restrict in any way a system in which the method according to the invention can be utilized. The cruise control 2 comprises a control device 4 for adjusting the speed of a vehicle 3. The control device 4 for the cruise control comprises a device 5 for adjusting the speed of the vehicle. The adjusting device 5 has a plus function and a minus function 6, 7 that can be achieved using, for example, a button with both a plus function and a minus function, or as illustrated in Figure 1 by a separate plus button 6 and a separate minus button 7, or by a lever or the like. In addition, the control device 4 for the cruise control can comprise buttons for other functions, for example a start button 8 for activating the cruise control 2. Alternatively, instead of such a start button 8, the plus button and/or the minus button 6, 7 on the adjusting device 5 can be used as a start button.

In addition, the control device 4 for the cruise control is suitably arranged to communicate with a computer unit 9 in the cruise control 2. According to the invention, the control device 4 for the cruise control and the computer unit 9 are arranged to interact in such a way that, under certain given conditions, the adjusting device 5 will change function in the way described according to the invention from providing a function for adjusting the speed of the vehicle 3 via the plus button and the minus button 6, 7 to a function for adjusting a distance or a time window to a vehicle ahead 10. If the said conditions are not fulfilled, the adjusting device 5 will provide the function for adjusting the speed of the vehicle 3 as described above. This means that the control device 4 for the cruise control is used in such a way that the same adjusting device 5, for example a set of buttons 6, 7, that is arranged for adjusting the speed of the vehicle 3 is also used to provide adjusting of a distance 11 or a time window to a vehicle ahead 10.

In addition to the abovementioned control device 4 for the cruise control and computer unit 9, the system 1 comprises one or more sensors 12, that utilize laser, radar or the like, arranged on the vehicle 3 in order to detect any vehicle ahead 10 and the distance 11 forward to such a vehicle ahead 10. For this purpose, the sensors 12 are arranged to communicate with the computer unit 9. In addition, the computer unit 9 is arranged to communicate with a control device arranged on the vehicle 3 for acceleration of the motor 13 of the vehicle 3 and/or with a control device arranged on the vehicle 3 for operating the service brake 14 and/or auxiliary brake of the vehicle 3, and with a sensor 15 of some kind for detecting the speed of the vehicle 3. Such a sensor 15 can, for example, detect the rotation speed of the wheels 16 of the vehicle and transmit this information to the computer unit 9. Alternatively, the said sensors 12 can be used to determine the speed of the vehicle 3.

At least one sensor 12 is arranged to operate towards a vehicle ahead 10. It is, however, possible for one or more of the sensors 12 to operate towards other reference points in the surroundings that are not located on the vehicle ahead 10 in order to determine the distance/time window 11 between the vehicle 3 and the vehicle ahead 10 and/or in order to determine the speed of the vehicle 3 or the speed of the vehicle ahead 10. By the term "time window" is meant in this text the time it takes from the vehicle ahead 10 leaving a particular given position until the vehicle behind 3 that is provided with the cruise control 2 reaches this position. The time window will thus be a function of both the distance 11 between the vehicle ahead 10 and the vehicle behind 3, and of the speed of the vehicle behind 3.

The invention relates to a method for adjusting a desired distance 11 or a desired time window between a first vehicle 3 and a vehicle 10 that is ahead of the first vehicle 3, where said first vehicle 3 is equipped with a cruise control 2 provided with an adjusting device 5 that can be operated by an operator, such as a button 6, 7 or the like, that has a plus function and a minus function for adjusting the speed of the first vehicle 3. In order to describe how the method works together with the system described above, three different states can be defined, which states are relevant when the cruise control 2 is activated:
1. No vehicle ahead 10 is detected,
2. A vehicle ahead 10 is detected, but the speed of the first vehicle 3 is not yet matched to the speed of the vehicle ahead 10, that is the speed of the first vehicle 3 is different from the speed of the vehicle ahead 10, and
3. A vehicle ahead 10 is detected by the cruise control 2 and the speed of the first vehicle 3 is essentially the same as the speed of the vehicle ahead 10.

When no vehicle ahead 10 is detected in accordance with point 1 above, operation of the adjusting device 5 means that the selected speed is changed. In this state, the control device 4 for the cruise control thus provides a function for adjusting the speed of the vehicle 3. By operation of the plus button 6 and the minus button 7, the speed of the first vehicle 3 selected by means of the cruise control 2 can be increased or decreased.

In a state in accordance with point 2 above, when a vehicle ahead 10 is detected by the cruise control 2 of the first vehicle 3 but the speed of the first vehicle 3 is not yet matched to the speed of the vehicle ahead 10, then in the same way operation of the adjusting device 5 means that the selected speed is changed.

In a state when a vehicle ahead 10 is detected by the cruise control 2 and the speed of the first vehicle 3 is matched to the speed of the vehicle ahead 10 in accordance with point 3 above, the plus function and the minus function 6, 7 of the adjusting device 5 can be changed from adjusting the speed of the first vehicle 3 to adjusting a distance 11 or a time window between the first vehicle 3 and the vehicle ahead 10, so that after the said change of function, in the event of operation of the plus function and the minus function 6, 7 of the adjusting device 5, the selected distance 11 or the selected time window between the first vehicle 3 and the vehicle ahead 10 will be increased or decreased, while, at the same time, the cruise control 2 controls the motor 13 or brakes 14 of the first vehicle in order to adjust the selected distance/selected time window 11.

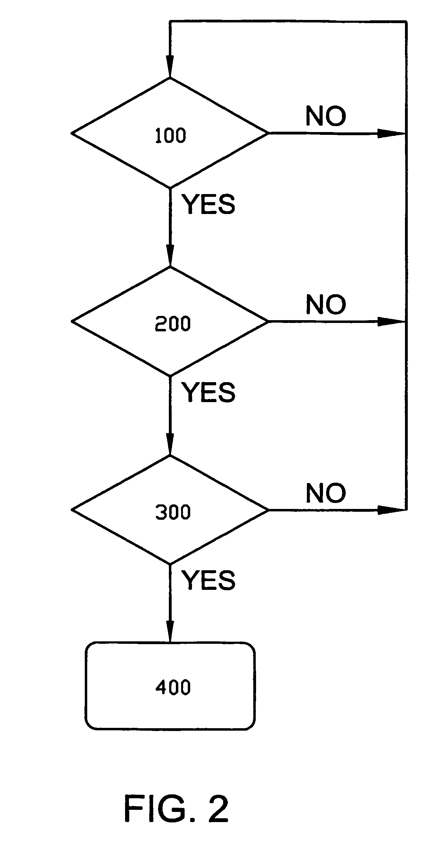

The control device 4 for the cruise control and the computer unit 9 are arranged to interact in such a way that the computer unit 9 can receive signals generated by an operator operating the adjusting device 5, which signals can be used as instructions for either a selection of the speed of the vehicle 3 or a selection of the distance/time window 11 to a vehicle ahead 10. By the suitable choice of software, the computer unit 9 can process the received signals, taking into account the states described above under points 1-3. A control unit can be achieved based on known electrical and/or mechanical control components and associated software. A computer program that can be loaded directly into the internal memory of a computer, comprising data code or software code elements for instructing a processor, can be used to carry out the steps that are defined in the method according to the invention when the program is run on a computer. See also the description below with reference to Figure 2, in which an example of a set of steps in the method according to the invention is described. The computer program should be able to be provided at least partially over a network, such as the Internet. The control unit can be designed to receive a medium that can be read by a computer with a computer program stored thereon that is intended to bring a computer to carry out the steps that are defined by the method according to the invention.

Figure 2 shows an example of a flow chart for the method according to the invention. The flow chart comprises:
100: Is the cruise control activated?
200: Is there a vehicle ahead?
300: Have the vehicle ahead and the vehicle being driven essentially the same speed?
400: Initiate changing of the plus function and the minus function of the adjusting device in the cruise control.

In an embodiment of the invention, there is also a condition concerning the operator. In such a case, step 300 should instead be: Have the vehicle ahead and the vehicle being driven essentially the same speed and has the operator carried out the requisite actions?

After activation of the cruise control, the system detects a vehicle ahead, after which the speed of the vehicle ahead is compared with the speed of the vehicle being driven. A predetermined range is suitably defined in the computer unit's software, which range can depend upon the rate of speed, and within which range the difference between the speeds of the vehicles is to fall in order to be classified as being "essentially the same speeds". A speed difference outside this range is classified as the vehicles having different speeds. This function can, of course, be supplemented with other conditions, such as time-related requirements, etc. For example, the speed difference range could be combined with a requirement that the speed difference must be within the range for a certain minimum period of time in order for the speeds to be classified as "essentially the same speeds". For example, a speed difference that is less than 10%, or less that 5%, can constitute a suitable range for the speeds to.be able to be classified as "essentially the same speeds".

There are different ways of carrying out the change-over from adjusting the selected speed to adjusting the selected distance/selected time window 11 in the adjusting device 5 of the control device 4 for the cruise control. One way is that, as soon as the conditions listed under point 3 above are fulfilled, the function is changed automatically, that is without action by an operator, so that operating the plus function and the minus function 6, 7 of the adjusting device 5 will thereafter mean that the selected distance/selected time window 11 is increased or decreased. In such a case, the driver can suitably be given some form of information that indicates that such a change of function has taken place. This can be carried out, for example, by displaying the information in a display screen and/or by activating an indication lamp.

Another variant is that, in addition to the conditions listed under point 3 regarding a vehicle ahead 10 and the relative speed of the vehicles 3, 10 having to be fulfilled, it is required, in addition, that the operator carries out a particular action in some way, for example operates the plus function or the minus function 6, 7 of the adjusting device 5, in order for the change of function from selection of speed to selection of distance/time window to be initiated. This means that when the adjusting device 5 still provides an adjustment of the speed and the conditions under point 3 are thereafter fulfilled, and the operator operates the plus button or the minus button 6, 7 of the adjusting device 5 for the first time after these conditions have been fulfilled, then no change of speed will take place. Instead the change of function will be initiated, which results in that subsequent operation of the adjusting device 5 will imply that a selected distance 11 is adjusted. Irrespective of how the change of function has been initiated, operation of the control device 4 for the cruise control adjusting device 5 after the change of function has been carried out will thus result in a change in the selected distance/selected time window 11.

The change of function could also be combined with the cruise control 2 automatically controlling the distance/time window 11 to the vehicle ahead 10 at the same time, in such a way that, in a state when the operator has still not selected a desired distance/desired time window, the distance that applies at the time of the change of function is initially maintained, or in such a way that the distance/time window 11 is adjusted to a different preset basic value.

According to an embodiment of the invention, the method is such that, for adjusting the distance/time window 11, momentary operation of the adjusting device 5 results in the distance/time window 11 being changed in steps. A relatively short operation of the button 6, 7 will thus mean that the selected distance/selected time window 11 will be decreased or increased by a predetermined increment. Continuous operation of the adjusting device 5 will, however, mean that the selected distance/selected time window 11 is changed continuously. Relatively long operation of the button 6, 7 will thus mean that the selected distance/selected time window 11 is changed continuously as long as the operator operates the button 6, 7, and, when the operator ceases to operate the button, a selected distance/selected time window 11 will be fixed at the current value.

According to an alternative embodiment of the invention, the method comprise that momentary operation of the adjusting device 5 changes the selected speed. Relatively short operation of the button 6, 7 will thus mean that the selected speed is changed in predefined steps. Continuous operation of the adjusting device 5 will, however, result in the selected distance/selected time window 11 being changed continuously. Relatively long operation of the button 6, 7 will thus mean that the selected distance/selected time window 11 is changed continuously as long as the operator operates the button 6, 7, and, when the operator ceases to operate the button, a selected distance/selected time window 11 will be fixed at the current value.

When there is an actual distance or an actual time window to the vehicle ahead 10 that is smaller than a selected distance/selected time window, the motor 13 and/or brakes 14 of the vehicle 3 can be controlled by means of signals from the computer unit 9, that is the speed of the vehicle 3 is decreased, so that the distance/time window is increased in order to attain the selected value. In the opposite situation, when there is an actual distance or an actual time window to the vehicle ahead 10 that is larger than a selected distance/selected time window, the motor 13 of the vehicle can be controlled, that is the speed of the vehicle 3 is increased, so that the distance/time window is decreased in order to attain the selected value. Such an increase in speed is, however, normally restricted to being within the framework of the speed selected by means of the cruise control 2.

In order to determine which of the states according to points 1-3 is applicable, various kinds of information can be used. Information from the sensors 12 is preferably used for detecting a vehicle ahead 10 and its speed. In addition, information about the speed of the first vehicle 3 in which the cruise control 2 is arranged can be obtained from a sensor 15 arranged on the vehicle 3, for example a sensor 15 that measures the rotation speed of a wheel axle, or alternatively from the sensors 12. It is also possible to store information in the computer unit 9 about any previously selected speed and/or any previously selected distance or time window.

It will be recognized that the present invention is not limited to the embodiments that are described above and illustrated in the drawings; it is rather the case that experts in the field will be able to discover that many changes and modifications can be carried out within the framework of the protection provided by the attached claims. For example, it can be mentioned that criteria should, of course, be defined that determine whether the adjusting device is to remain in the distance-adjusting state or whether the function of the adjusting device is to be changed back to speed adjustment, and/or whether the cruise control is to be switched off completely. These criteria can, however, be varied in many different ways within the framework of the invention.

## Claims

1. A method for adjusting a desired distance (11) or a desired time window between a first vehicle (3) and a vehicle (10) that is ahead of the first vehicle, said first vehicle (3) comprising a cruise control (2) provided with an adjusting device (5) that can be operated by an operator, such as a button or the like, with a plus function and a minus function (6, 7) for adjusting the speed of the first vehicle (3), **characterized in that**, in a state in which a vehicle ahead (10) is detected by the cruise control (2) and the speed of the first vehicle (3) is essentially the same as the speed of the vehicle ahead (10), the plus function and the minus function (6, 7) of the adjusting device (5) are changed automatically or by an action of an operator from adjusting the speed of the first vehicle (3) to adjusting a distance (11) or a time window between the first vehicle (3) and the vehicle ahead (10), so that, after the said change of function, upon operation of the plus function and the minus function (6, 7) of the adjusting device (5), the selected distance (11) or the selected time window between the first vehicle (3) and the vehicle ahead (10) will be increased or decreased, while, at the same time, the cruise control (2) controls the motor (13) and/or brakes (14) of the first vehicle (3) in order to adjust the selected distance/selected time window (11).

2. The method as claimed in claim 1, **characterized in that** after the said change of function, momentary operation of the adjusting device (5) results in the selected distance/selected time window (11) being changed in steps.

3. The method as claimed in claim 1 or 2, **characterized in that** after the said change of function, continuous operation of the adjusting device (5) results in the selected distance/selected time window (11) being changed continuously.

4. The method as claimed in any one of the preceding claims, **characterized in that** the said change of function is initiated irrespective of whether an operator operates the adjusting device (5) or not.

5. The method as claimed in any one of claims 1-3, **characterized in that** the said change of function is initiated only if an operator operates the adjusting device (5).

6. The method as claimed in any one of the preceding claims, **characterized in that** at the change of function, the distance/time window (11) is set initially to a pre-set basic value.

7. The method as claimed in claim 6, **characterized in that** at the change of function, the distance/time window (11) is adjusted initially to maintain the distance to the vehicle ahead (10) that applied at the change of function.

8. The method as claimed in any one of the preceding claims, **characterized in that** when there is an actual distance or an actual time window to a vehicle ahead (10) that is smaller than a selected distance/selected time window (11), the motor (13) and/or brakes (14) of the first vehicle (3) are controlled in such a way that the distance/time window is increased.

9. The method as claimed in any one of the preceding claims, **characterized in that** when there is an actual distance or an actual time window to a vehicle ahead (10) that is larger than a selected distance/selected time window (11), the motor (13) of the first vehicle is controlled in such a way that the distance/time window is decreased, within the framework of any speed selected using the cruise control (2).

10. The method as claimed in claim 1, **characterized in that** when no vehicle ahead (10) is detected, operation of the adjusting device (5) results in the selected speed for the first vehicle (3) being changed.

11. The method as claimed in claim 1, **characterized in that** when a vehicle ahead (10) is detected by the cruise control (2) of the first vehicle (3) but the speed of the first vehicle (3) is different from the speed of the vehicle ahead (10), operation of the adjusting device (5) results in the selected speed for the first vehicle (3) being changed.

12. A computer program for controlling the function of a cruise control arranged on a first vehicle, which cruise control is provided with an adjusting device, such as a button or the like, which adjusting device has a plus function and a minus function for adjusting the speed of the first vehicle, with the computer program comprising instructions for measuring the speed of the first vehicle, and for detecting a vehicle that is ahead of the first vehicle and for measuring its speed, and instructions for changing the function of the adjusting device automatically or by an action of an operator from adjusting the speed of the first vehicle to adjusting a distance or a time window between the first vehicle and the vehicle ahead, in a state when a vehicle ahead is detected by the cruise control and the speed of the first vehicle is essentially the same as the speed of the vehicle ahead, so that, after the said change of function, upon operation of the plus function and the minus function of the adjusting device, the selected distance or the selected time window between the first vehicle and the vehicle ahead is increased or decreased, while, at the same time, the cruise control controls the motor or brakes of the first vehicle in order to adjust the selected distance/selected time window.

13. A computer program that can be loaded into the internal memory of a computer and comprising computer code for instructing a processor to carry out a method as claimed in any one of claims 1-11 when said program is executed by a computer.

14. The computer program as claimed in claim 13, provided at least partially over a network, such as the Internet.

15. Computer readable medium that can be read by a computer comprising program code stored thereon for carrying out the method in any one of claims 1-11.

## Patentansprüche

1. Verfahren zur Einstellung einer gewünschten Distanz (11) oder eines gewünschten Zeitfensters zwischen einem ersten Fahrzeug (3) und einem Fahrzeug (10), das sich vor dem ersten Fahrzeug befindet, wobei das erste Fahrzeug (3) eine Tempomat-Steuerung (2) umfasst, die mit einer Einstellvorrichtung (5) versehen ist, die durch eine Bedienungsperson betätigt werden kann, wie zum Beispiel einem Knopf oder dergleichen, mit einer Plusfunktion und einer Minusfunktion (6, 7) zur Einstellung der Geschwindigkeit des ersten Fahrzeugs (3), **dadurch gekennzeichnet, dass** in einem Zustand, in dem ein vorderes Fahrzeug (10) durch die Tempomat-Steuerung (2) erfasst wird und die Geschwindigkeit des ersten Fahrzeugs (3) im Wesentlichen dieselbe ist, wie die Geschwindigkeit des vorderen Fahrzeugs (10), die Plusfunktion und die Minusfunktion (6, 7) der Einstellvorrichtung (5) automatisch oder durch eine Aktion einer Bedienungsperson von der Einstellung der Geschwindigkeit des ersten Fahrzeugs (3) bis zu einer Einstellung einer Distanz (11) oder eines Zeitfensters zwischen dem ersten Fahrzeug (3) und dem vorderen Fahrzeug (10) geändert werden, so dass nach der Änderung der Funktion bei Betätigung der Plusfunktion und der Minusfunktion (6, 7) der Einstellvorrichtung die gewählte Distanz (11) oder das gewählte Zeitfenster zwischen dem ersten Fahrzeug (3) und dem vorderen Fahrzeug (10) vergrößert oder verringert werden, während gleichzeitig die Tempomat-Steuerung (2) den Motor (13) und/oder die Bremsen (14) des ersten Fahrzeugs (3) steuert, um die gewählte Distanz/das gewählte Zeitfenster (11) einzustellen.

2. Verfahren nach Anspruch 1, **dadurch gekennzeichnet, dass** nach dem Ändern der Funktion eine vorübergehende Betätigung der Einstellvorrichtung (5) darin resultiert, dass die gewählte Distanz/das gewählte Zeitfenster (11) stufenweise verändert werden.

3. Verfahren nach Anspruch 1 oder 2, **dadurch gekennzeichnet, dass** nach dem Ändern der Funktion eine durchgehende Betätigung der Einstellvorrichtung (5) darin resultiert, dass die gewählte Distanz/das gewählte Zeitfenster (11) fortlaufend verändert werden.

4. Verfahren nach einem der vorhergehenden Ansprüche, **dadurch gekennzeichnet, dass** die Veränderung der Funktion unabhängig davon initiiert wird, ob eine Bedienungsperson die Einstellvorrichtung (5) betätigt oder nicht.

5. Verfahren nach einem der Ansprüche 1 bis 3, **dadurch gekennzeichnet, dass** die Veränderung der Funktion nur initiiert wird, wenn eine Bedienungsperson die Einstellvorrichtung (5) betätigt.

6. Verfahren nach einem der vorhergehenden Ansprüche, **dadurch gekennzeichnet, dass** bei Veränderung der Funktion die Distanz/ das Zeitfenster (11) anfänglich auf einen voreingestellten Basiswert eingestellt wird.

7. Verfahren nach Anspruch 6, **dadurch gekennzeichnet, dass** bei Veränderung der Funktion die Distanz/ das Zeitfenster (11) anfänglich so eingestellt wird, dass die Distanz zu dem vorderen Fahrzeug (10) aufrecht erhalten wird, die beim Wechseln der Funktion galt.

8. Verfahren nach einem der vorhergehenden Ansprüche, **dadurch gekennzeichnet, dass** bei einer tatsächlichen Distanz oder einem tatsächlichen Zeitfenster zu einem vorderen Fahrzeug (10), die/das kleiner ist als eine gewählte Distanz/ ein gewähltes Zeitfenster (11), der Motor (13) und/oder die Bremsen (14) des ersten Fahrzeugs (3) so gesteuert werden, dass die Distanz/das Zeitfenster vergrößert wird.

9. Verfahren nach einem der vorhergehenden Ansprüche, **dadurch gekennzeichnet, dass** bei einer tatsächlichen Distanz oder einem tatsächlichen Zeitfenster zu einem vorderen Fahrzeug (10), die/das größer ist als eine gewählte Distanz/ein gewähltes Zeitfenster (11), der Motor (13) des ersten Fahrzeugs so gesteuert wird, dass die Distanz/das Zeitfenster innerhalb des Bereiches jeder Geschwindigkeit verringert wird, die durch Verwendung der Tempomat-Steuerung (2) gewählt wird.

10. Verfahren nach Anspruch 1, **dadurch gekennzeichnet, dass**, wenn kein vorderes Fahrzeug (10) erfasst wird, eine Betätigung der Einstellvorrichtung (5) darin resultiert, dass die gewählte Geschwindigkeit des ersten Fahrzeugs (3) verändert wird.

11. Verfahren nach Anspruch 1, **dadurch gekennzeichnet, dass**, wenn durch die Tempomat-Steuerung (2) des ersten Fahrzeugs (3) ein vorderes Fahrzeug (10) erfasst wird, jedoch die Geschwindigkeit des ersten Fahrzeugs (3) zur der Geschwindigkeit des vorderen Fahrzeugs (10) unterschiedlich ist, eine Betätigung der Einstellvorrichtung (5) darin resultiert, dass die gewählte Geschwindigkeit des ersten Fahrzeugs (3) verändert wird.

12. Computerprogramm zur Steuerung der Funktion einer Tempomat-Steuerung, die an einem Fahrzeug angeordnet ist, wobei die Tempomat-Steuerung mit einer Einstellvorrichtung versehen ist, wie zum Beispiel einem Knopf oder dergleichen, wobei die Einstellvorrichtung eine Plusfunktion und eine Minusfunktion zur Einstellung der Geschwindigkeit des ersten Fahrzeugs umfasst, wobei das Computerprogramm Instruktionen zur Messung der Geschwindigkeit des ersten Fahrzeugs und zur Erfassung eines Fahrzeugs, das sich vor dem ersten Fahrzeug befindet, und zur Messung seiner Geschwindigkeit, und Instruktionen zur Veränderung der Funktion der Einstellvorrichtung automatisch oder durch Aktion einer Bedienungsperson von der Einstellung der Geschwindigkeit des ersten Fahrzeugs bis zur Einstellung einer Distanz oder eines Zeitfensters zwischen dem ersten Fahrzeug und dem vorderen Fahrzeug in einem Zustand umfasst, in dem ein vorderes Fahrzeug durch die Tempomat-Steuerung erfasst wird und die Geschwindigkeit des ersten Fahrzeugs im Wesentlichen dieselbe ist wie die Geschwindigkeit des vorderen Fahrzeugs, so dass nach der Veränderung der Funktion bei Betätigung der Plusfunktion und der Minusfunktion der Einstellvorrichtung die gewählte Distanz oder das gewählte Zeitfenster zwischen dem ersten Fahrzeug und dem vorderen Fahrzeug erhöht oder verringert wird, während gleichzeitig die Tempomat-Steuerung den Motor oder die Bremsen des ersten Fahrzeugs steuert, um die gewählte Distanz/das gewählte Zeitfenster einzustellen.

13. Computerprogramm, das in den inneren Speicher eines Computers geladen werden kann und einen Computercode zur Instruktion eines Prozessors zur Durchführung eines Verfahrens nach einem der Ansprüche 1 bis 11 umfasst, wenn das Programm durch einen Computer ausgeführt wird.

14. Computerprogramm nach Anspruch 13, das wenigstens teilweise über ein Netzwerk bereitgestellt wird, wie zum Beispiel das Internet.

15. Computerlesbares Medium, das von einem Computer gelesen werden kann, mit einem darauf gespeicherten Programmcode zur Durchführung des Verfahrens nach einem der Ansprüche 1 bis 11.

## Revendications

1. Procédé pour ajuster une distance souhaitée (11) ou une fenêtre de temps souhaitée entre un premier véhicule (3) et un véhicule (10) qui est devant le premier véhicule, ledit premier véhicule (3) comprenant un régulateur de vitesse (2) muni d'un dispositif d'ajustement (5) qui peut être mis en marche par un opérateur, tel qu'un bouton ou analogue, avec une fonction plus et une fonction moins (6, 7) pour ajuster la vitesse du premier véhicule (3), **caractérisé en ce que**, dans un état dans lequel un véhicule qui est devant (10) est détecté par le régulateur de vitesse (2) et la vitesse du premier véhicule (3) est sensiblement la même que la vitesse du véhicule qui est devant (10), la fonction plus et la fonction moins (6, 7) du dispositif d'ajustement (5) sont modifiées automatiquement ou par une action d'un opérateur pour passer de l'ajustement de la vitesse du premier véhicule (3) à l'ajustement d'une distance (12) ou d'une fenêtre de temps entre le premier véhicule (3) et le véhicule qui est devant (10), de sorte que, après ledit changement de fonction, lors d'une mise en marche de la fonction plus et de la fonction moins (6, 7) du dispositif d'ajustement (5), la distance sélectionnée (11) ou la fenêtre de temps sélectionnée entre le premier véhicule (3) et le véhicule qui est devant (10) sera augmentée ou diminuée, tandis que, en même temps, le régulateur de vitesse (2) contrôle le moteur (13) et/ou les freins (14) du premier véhicule (3) afin d'ajuster la distance sélectionnée/la fenêtre de temps sélectionnée (11).

2. Procédé selon la revendication 1, **caractérisé en ce que**, après ledit changement de fonction, un fonctionnement momentané du dispositif d'ajustement (5) résulte en une modification par étapes de la distance sélectionnée/de la fenêtre de temps sélectionnée (11).

3. Procédé selon la revendication 1 ou 2, **caractérisé en ce que**, après ledit changement de fonction, un fonctionnement continu du dispositif d'ajustement (5) résulte en une modification continue de la distance sélectionnée/de la fenêtre de temps sélectionnée (11).

4. Procédé selon l'une quelconque des revendications précédentes, **caractérisé en ce que** ledit changement de fonction est déclenché indépendamment du fait qu'un opérateur mette en marche le dispositif d'ajustement (5) ou non.

5. Procédé selon l'une quelconque des revendications 1 à 3, **caractérisé en ce que** ledit changement de fonction est déclenché uniquement si un opérateur met en marche le dispositif d'ajustement (5).

6. Procédé selon l'une quelconque des revendications précédentes, **caractérisé en ce que**, lors du changement de fonction, la distance/fenêtre de temps (11) est réglée au départ sur une valeur de base préétablie.

7. Procédé selon la revendication 6, **caractérisé en ce que**, lors du changement de fonction, la distance/fenêtre de temps (11) est ajustée au départ pour maintenir la distance jusqu'au véhicule qui est devant (10) qui s'est appliquée au moment du changement de fonction.

8. Procédé selon l'une quelconque des revendications, **caractérisé en ce que**, lorsqu'il y a une distance réelle ou une fenêtre de temps réelle jusqu'à un véhicule qui est devant (10) qui est inférieure à une distance sélectionnée/une fenêtre de temps sélectionnée (11), le moteur (13) et/ou les freins (14) du premier véhicule (3) sont contrôlés de telle manière que la distance/fenêtre de temps augmente.

9. Procédé selon l'une quelconque des revendications, **caractérisé en ce que**, lorsqu'il y a une distance réelle ou une fenêtre de temps réelle jusqu'à un véhicule qui est devant (10) qui est supérieure à une distance sélectionnée/une fenêtre de temps sélectionnée (11), le moteur (13) du premier véhicule est contrôlé de telle manière que la distance/fenêtre de temps diminue, dans le cadre d'une vitesse quelconque sélectionnée en utilisant le régulateur de vitesse (2).

10. Procédé selon la revendication 1, **caractérisé en ce que**, lorsqu'aucun véhicule devant (10) n'est détecté, un fonctionnement du dispositif de d'ajustement (5) résulte en une modification de la vitesse sélectionnée pour le premier véhicule (3).

11. Procédé selon la revendication 1, **caractérisé en ce que**, lorsqu'un véhicule devant (10) est détecté par le régulateur de vitesse (2) du premier véhicule (3), mais que la vitesse du premier véhicule (3) est différente de la vitesse du véhicule qui est devant (10), un fonctionnement du dispositif d'ajustement (5) résulte en une modification de la vitesse sélectionnée pour le premier véhicule (3).

12. Programme informatique pour contrôler la fonction d'un régulateur de vitesse agencé sur un premier véhicule, lequel régulateur de vitesse est muni d'un dispositif d'ajustement, tel qu'un bouton ou analogue, lequel dispositif d'ajustement a une fonction plus et une fonction moins pour ajuster la vitesse du premier véhicule, le programme informatique comprenant des instructions pour mesurer la vitesse du premier véhicule, et pour détecter un véhicule qui est devant le premier véhicule et pour mesurer sa vitesse, et des instructions pour changer la fonction du dispositif d'ajustement automatiquement ou par une action d'un opérateur pour passer d'un ajustement de la vitesse du premier véhicule à un ajustement d'une distance ou d'une fenêtre de temps entre le premier véhicule et le véhicule qui est devant, dans un état où un véhicule qui est devant est détecté par le régulateur de vitesse et où la vitesse du premier véhicule est sensiblement la même que la vitesse du véhicule qui est devant, de sorte que, après ledit changement de fonction, lors d'une mise en marche de la fonction plus et de la fonction moins du dispositif d'ajustement, la distance sélectionnée ou la fenêtre de temps sélectionnée entre le premier véhicule et le véhicule qui est devant est augmentée ou diminuée, tandis que, en même temps, le régulateur de vitesse contrôle le moteur ou les freins du premier véhicule afin d'ajuster la distance sélectionnée/la fenêtre de temps sélectionnée.

13. Programme informatique peut être chargé dans la mémoire interne d'un ordinateur, et comprenant un code informatique pour charger un processeur de réaliser un procédé selon l'une quelconque des revendications 1 à 11, lorsque ledit programme est exécuté par un ordinateur.

14. Programme informatique selon la revendication 13, fourni au moins partiellement sur un réseau, tel que l'Internet.

15. Support pouvant être lu sur ordinateur, qui peut être lu par un ordinateur comprenant un code de programme stocké sur celui-ci afin de réaliser le procédé selon l'une quelconque des revendications 1 à 11.
